# DEMANDE DE BREVET EUROPEEN

(11) **EP 3 034 296 A1**
(43) Date de publication de la demande: **22.06.2016**
(21) Numéro de dépôt: 14199137.2
(22) Date de dépôt: 19.12.2014
(51) Int. Cl.: B32B 17/10, C03C 27/12

(54) **VITRAGE FEUILLETE**

(71) Demandeur: AGC Glass Europe, 1348 Louvain-la-Neuve (BE)
(72) Inventeur: Legrand, Denis, 59144 Wargnies (FR)
(74) Mandataire: Chabou, Samia

(57) **Abrégé**

L'invention est relative aux vitrages feuilletés comprenant une première 11 et une seconde 12 feuilles de verre laminées au moyen d'au moins un intercalaire thermoplastique 20.

Selon l'invention, de tels vitrages comprennent au moins un intercalaire thermoplastique 20 comprenant une zone opaque aux longueurs d'ondes du visible 21.

## Description

L'invention est relative aux vitrages comportant des motifs limitant la transmission lumineuse. Une large part des vitrages automobiles comporte des motifs émaillés destinés à masquer des éléments inesthétiques, notamment des joints de colle, des connexions électriques etc. Traditionnellement, ces motifs sont obtenus par application d'une composition comprenant une fritte de verre, des pigments un vecteur dans lequel la fritte et les pigments sont mis en suspension. L'application de ces compositions d'émail est suivie d'une cuisson à température élevée qui fond la fritte et fixe l'émail au support.

Si une large part des vitrages automobiles comporte des motifs de ce type, les vitrages architecturaux ou à usage industriel, peuvent aussi présenter de tels motifs limitant très fortement la transmission lumineuse. Pour cette raison, même si l'invention est d'abord destinée à l'application aux vitrages automobiles, elle concerne aussi les autres sortes de vitrages et de façon générale toutes les applications de motifs sur des feuilles de verre, en particulier lorsque ceux-ci présentent dans leur constitution ou dans leur mise en oeuvre, des contraintes notamment en matière de traitements thermiques.

Par simplification, la suite de la description fait référence essentiellement aux vitrages automobiles, étant entendu que ceci ne limite pas l'objet de l'invention.

Le plus habituellement l'application des motifs émaillés sur le verre est réalisée par une technique de sérigraphie. La composition appliquée est séchée pour éliminer la plus grande part du vecteur, et, soumise à une cuisson destinée à fixer les constituants sur la feuille de verre. La cuisson de la composition d'émail peut être effectuée au cours d'un traitement de formage de la feuille. Les conditions de température dans lesquelles le formage intervient, qu'il s'agisse de trempe ou de bombage, sont telles que la température de fusion de la fritte est largement dépassée.

Une difficulté est d'éviter que la composition fondue n'adhère aux objets au contact de la feuille au cours de cette opération. En particulier dans le bombage d'ensembles comportant deux feuilles identiques destinées à constituer un vitrage feuilleté, il est nécessaire de prendre des précautions pour que la composition d'émail ne soit pas transférée d'une feuille à l'autre.

Par ailleurs la présence de la composition émaillée sur une feuille de verre entraîne diverses difficultés dans la mise en oeuvre de ces opérations de bombage/trempe, en modifiant localement le comportement thermique de la feuille. La présence de l'émail se traduit en effet par une différence sensible d'absorption du rayonnement thermique, entraînant, localement, des différences dans la cinétique de formage. Ces différences, si elles ne sont pas prises en compte dans les conditions de traitement, conduisent à des irrégularités dans le formage.

Les difficultés du type de celles indiquées ci-dessus sont bien connues. Des solutions également connues permettent de dépasser ces difficultés d'autant plus commodément que la forme imposée aux feuilles n'est pas trop complexe. Pour les formes très complexes, il est nécessaire le plus souvent de former les feuilles au moyen d'un pressage partiel qui entraîne nécessairement un contact avec les parties émaillées.

Pour éviter ces difficultés et répondre aux exigences de masquage, l'invention propose des vitrages et en particulier des vitrages feuilletés comportant un intercalaire thermoplastique comprenant une zone opaque aux rayonnements des longueurs d'ondes du visible. En particulier, l'invention consiste à substituer la sérigraphie usuellement utilisée sur au moins la face 2 pour masquer le bord des vitrages, par un film intercalaire thermoplastique comprenant une zone opaque aux rayonnements des longueurs d'onde du visible. La mise en oeuvre de cet intercalaire thermoplastique comprenant une zone opaque aux rayonnements des longueurs du visible et donc sans fritte ne nécessite pas une « cuisson » à température relativement élevée, telle que celle atteinte avec des compositions d'émaux.

Par simplification, la numérotation des feuilles de verre dans la suite de la description fait référence à la nomenclature de numérotation classiquement utilisée pour les vitrages. Ainsi, la face du feuilleté qui est au contact avec l'environnement extérieur au véhicule est connue comme étant la face 1 et la surface en contact avec le milieu interne, c'est-à-dire l'habitacle du véhicule, est appelée face 4.

Pour éviter tout doute, les termes "externe" et "interne" se réfèrent à l'orientation du vitrage lors de l'installation en tant que vitrage dans un véhicule.

Classiquement, les vitrages feuilletés pour automobile sont imprimés sur toute la périphérie des bords du vitrage en face 2, pour former une bande d'occultation, afin d'une part protéger du rayonnement UV la colle permettant d'adhérer tous les busbars et des connecteurs électriques et le faisceau de câblage du véhicule, et d'autre part de masquer ces éléments.

Ainsi, le but de la bande est double, d'une part l'esthétique, car de l'extérieur tous ces éléments ne sont pas visibles de l'extérieur, et d'autre part, pour éviter les dommages de la colle ou d'autres composants de l'exposition aux UV.

Généralement, l'impression utilisée est la sérigraphie de l'émail. En effet, l'émail permet de procurer les qualités optiques requises et un masquage suffisant des éléments tels que ceux cités ci-dessus.

Cependant, la sérigraphie sur feuilles de verre n'est pas sans inconvénient. Dans un feuilleté, l'émail est sérigraphié en face intérieure de la feuille de verre destinée à la position extérieure, c'est-à-dire en contact avec l'atmosphère, appelée face 2, et/ou en face extérieure de la feuille de verre destinée à la position intérieure, appelée face 4, qui est en contact avec l'atmosphère intérieure, notamment de l'habitacle d'un véhicule.

De plus, les solutions de l'art antérieur nécessitent de prévoir des installations de pré-cuisson de cet émail destiné à la face 2. Ces installations représentent donc un coût lié à l'investissement du matériel, à l'entretien, la consommation d'énergie, de maintenance...

Par ailleurs, la présence de bandes d'émail sur les faces 2 et 4 n'est pas sans effet sur le comportement du verre lors de son bombage, car celles-ci font absorber au verre, des rayonnements infrarouges (IR), et ce localement sur la périphérie du vitrage, alors que la surface interne du verre n'en n'absorbera que faiblement, c'est d'autant plus vrai pour les pare-brise pour lesquels les feuilles de verre sont généralement des verres clairs, cela l'est d'autant plus encore lorsque sont utilisées des couches réfléchissantes. Dans cette mise en oeuvre, des zones hautement absorbantes se côtoient avec des zones hautement réfléchissantes.

Il en résulte un défaut verre appelé « burn line » qui est une déformation locale liée à ces deux phénomènes et parallèle aux bandes noires d'émail, elles sont d'autant plus fortes que les bandes noires sont larges. C'est la raison pour laquelle, ces burn lines sont essentiellement visibles en bande haute et basse des pare-brise, cest-à-dire les zones inférieure et supérieure du pare-brise. Les bandes noires latérales sont généralement minces de manière à maximiser le champ de vision.

Afin de réduire au maximum, ces défauts optiques, il est connu d'ajouter sur les outillages de bombage des masses thermiques, qui viendront, tant faire se peut, absorber les calories capturées par les zones du verre surchauffées localement par les présences des bandes noires.

Ces masses ont également un impact sur le bilan énergétique de consommation du four et aussi sur les temps de cycle, selon la complexité des produits à bomber.

Ainsi, la présence de bandes d'émail impacte non seulement le procédé, mais également la qualité optique des produits.

Selon l'invention, l'intercalaire thermoplastique comprenant une zone opaque aux rayonnements des longueurs d'ondes du visibles pour masquer des éléments inesthétiques, notamment des joints de colle, des connexions électriques etc, est avantageusement appliqué sur la face 2 du vitrage feuilleté lors des opérations d'assemblage comprenant un passage à l'étuve et sous pression (encore appelées lamination).

On entend par zone opaque aux rayonnements des longueurs d'ondes du visible, une zone dont la transmission lumineuse est inférieure à 5% et de préférence égale à 0% à la lumière incidente. Cette zone opaque, contrairement à l'émail, permet à la fois de masquer des éléments comme connectiques (busbars...), la colle... comme le ferait l'émail mais surtout simplifie le procédé de formation d'un vitrage feuilleté comportant des éléments devant être masqués aussi bien de de l'extérieur que de l'intérieur de l'habitacle.

Par souci de simplification, dans le reste de la description, le terme « la zone opaque » fera référence à la zone opaque aux rayonnements des longueurs d'ondes du visible.

L'aspect de la zone opaque doit être rigoureusement homogène s'agissant d'un revêtement dont le but est d'abord esthétique. Pour les mêmes raisons, la zone opaque doit avoir des contours très précis en dépit de la difficulté résultant de la nature du support.

Comme il ressort des indications précédentes, l'utilisation d'un intercalaire thermoplastique comprenant une zone opaque constitue une caractéristique de l'invention, qui la distingue des émaux habituellement mis en oeuvre.

Pour la zone opaque utilisée sur les vitrages pour dissimuler les éléments sous-jacents, l'opacité requise est telle que la transmission lumineuse soit inférieure à 5% et de préférence inférieure à 3% et de manière encore plus préférée égale à 0%.

L'invention a donc pour but la mise à disposition d'un vitrage feuilleté comportant un intercalaire thermoplastique comprenant une zone opaque aux rayonnements des longueurs d'ondes du visible permettant de masquer des éléments inesthétiques.

Ce but est atteint par l'invention qui a pour objet un vitrage feuilleté comprenant une première et une seconde feuille de verre assemblées (laminées) au moyen d'au moins un intercalaire thermoplastique.

Selon l'invention, le vitrage feuilleté comprend le au moins un intercalaire thermoplastique comprenant une zone opaque aux longueurs d'ondes du visible.

Selon un mode de réalisation préféré de l'invention, ladite zone opaque s'étend sur la toute la périphérie de la feuille de verre sur laquelle elle est appliquée, tout comme la couche d'émail. Cette zone opaque se substitut ainsi à l'émail classiquement utilisé.

Selon un mode de réalisation particulier de l'invention, la zone opaque peut s'étendre sur une large portion du vitrage feuilleté.

Selon un mode de réalisation préféré de l'invention, ladite zone opaque s'étend sur la toute la périphérie de la face interne de la feuille de verre externe c'est-à-dire en face 2.

Ainsi, grâce à l'invention, le procédé de masquage des éléments inesthétiques est simplifié et peut être mis en oeuvre durant le procédé d'assemblage (de laminage) du vitrage feuilleté.

Selon un mode de réalisation préféré de l'invention, l'intercalaire thermoplastique comprenant une zone opaque est formé à partir d'un cadre opaque disposé autour de la zone non opaque.

Selon un mode de réalisation particulier de l'invention, un intercalaire thermoplastique opaque dans son intégralité et de dimension permettant la lamination des feuilles de verre entre elles, peut être évidé de sa partie centrale pour former un cadre. La partie centrale est alors remplacée par un intercalaire thermoplastique non opaque ou transparent. Ces deux pièces lors du processus de lamination vont fusionner de manière à former une pièce unique. Avantageusement, le cadre est formé de bandes d'intercalaire opaque, par exemple un PVB ou un EVA teinté en noir dans la masse juxtaposée, les bandes étant disposées autour d'une pièce centrale d'un intercalaire thermoplastique, les pièces vont fusionnées ensemble de manière à former l'intercalaire thermoplastique qui s'étendra sur toute la périphérie des feuilles de verre.

Le au moins un intercalaire thermoplastique peut être de n'importe quel matériau connu dans la technique apte à former un stratifié. Il peut s'agir d'un copolymère éthylène-acétate de vinyle, polyuréthane, polycarbonate, polyvinyle butyral, le chlorure de polyvinyle ou un copolymère d'éthylène et d'acide méthacrylique. Selon un mode de réalisation préféré de l'invention, l'intercalaire thermoplastique comprenant une zone opaque aux rayonnements des longueurs du visible est une feuille de polyvinyle de butyral (PVB) ou d'éthylène-acétate de vinyl (EVA).

Il est généralement disponible dans une épaisseur comprise entre 0,38 et 1,1 mm, mais le plus souvent de 0,76 mm.

Selon un mode de réalisation préféré de l'invention, l'intercalaire thermoplastique comprenant une zone opaque est obtenu par coloration en masse de la périphérie de l'intercalaire.

Selon un mode de réalisation préféré de l'invention, l'intercalaire thermoplastique comprenant une zone opaque est obtenu par juxtaposition d'un cadre d'intercalaire thermoplastique coloré opaque et d'une partie centrale formée d'un intercalaire transparent, le cadre opaque et la partie centrale de l'intercalaire thermoplastique pouvant être dans un matériau thermoplastique identique ou différent, l'un étant coloré et l'autre non.

Selon une mise en oeuvre particulière de l'invention, les dimensions de la zone opaque sont similaires à celle usuellement utilisées pour une couche d'émail. Il est entendu qu'elles peuvent être supérieures ou inférieures à celles de la couche d'émail, le but étant que la zone opaque soit suffisamment large pour masquer les éléments collés au vitrage tels que les busbars, connectiques....

Selon une mise en oeuvre particulière de l'invention, l'intercalaire thermoplastique comprenant une zone opaque aux rayonnements des longueurs du visible, selon l'invention est disposé substantiellement sur la surface du vitrage.

Avantageusement, le vitrage feuilleté comprend en outre un second intercalaire thermoplastique. De manière préférée, le second intercalaire thermoplastique est de préférence une feuille de polyvinyle de butyral (PVB).

Selon une mise en oeuvre avantageuse de l'invention, des intercalaires thermoplastiques supplémentaires peuvent être disposés entre l'intercalaire thermoplastique comprenant une zone opaque et la seconde feuille de verre. Dans cette mise en oeuvre particulière de l'invention, les intercalaires thermoplastiques sont choisis parmi un copolymère de polyvinyle de butyral ou d'éthylène-acétate de vinyle, ou de polyuréthane, ou de polycarbonate.

Selon une mise en oeuvre particulière de l'invention, seules les zones périphériques inférieure et supérieure du vitrage sont recouvertes par la zone opaque de l'intercalaire thermoplastique alors que les zones latérales (droite-gauche) du vitrage feuilleté sont pourvues d'une couche d'émail.

Par ailleurs, le choix des intercalaires peut être dicté par le besoin de minimiser une exposition excessive aux UV du vitrage. Le choix des intercalaires permet de limiter de façon considérable cette exposition. C'est le cas en particulier de l'utilisation d'intercalaires de PVB, qui par nature font écran aux UV ne laissant passer qu'une très faible proportion de ceux-ci. Pour les films PVB de 0,38mm d'épaisseur plus de 95% des UV sont supprimés. Cette proportion peut dépasser 99%. Des polymères à base d'éthylène vinyl-acétate (EVA) sont aussi proposés qui renferment des composants leur conférant une très faible transmission des UV.

De manière avantageuse, le au moins intercalaire thermoplastique selon l'invention comprend une zone non opaque qui est formée à partir d'un intercalaire thermoplastique qui fait écran aux UV encore appelé « UV-cut ».

Pour atteindre certaines valeurs de transmissions lumineuses, au moins une des feuilles de verre utilisées dans le vitrage feuilleté peut être colorée. Le vitrage peut aussi inclure des intercalaires colorés qui contribuent à l'établissement des conditions optiques recherchées.

Ainsi, des intercalaires thermoplastiques colorés peuvent être superposé de manière à obtenir une couleur particulière et/ou des conditions optiques particulières.

Selon une mise en oeuvre particulière de l'invention, la partie non opaque de l'intercalaire comprenant une zone opaque est formée par juxtaposition de morceaux d'intercalaires thermoplastiques colorés de manière à obtenir par exemple un dégradé de couleurs ou des motifs particuliers.

L'invention a d'autre part pour objet un procédé pour fabriquer un vitrage feuilleté tel que décrit précédemment.

Les avantages de ce procédé sont les mêmes que ceux des dispositifs, ils ne sont pas détaillés plus amplement.

L'invention concerne également l'utilisation d'au moins un intercalaire thermoplastique comprenant une zone opaque aux rayonnement des longueurs d'onde du visible, pour masquer des éléments inesthétiques compris entre deux feuilles de verre.

Pour une meilleure compréhension, la présente invention va maintenant être décrite plus en détail à titre d'exemple non limitatif, en référence aux figures suivantes dans lesquelles:
La ***figure 1*** montre une vue en plan schématique d'un vitrage 10 connu de l'art antérieur comprenant une couche d'émail en faces 2 et 4.
La ***figure 2*** montre une vue en plan schématique d'un vitrage 10 selon l'invention comprenant un intercalaire thermoplastique comprenant une zone opaque aux rayonnements des longueurs d'ondes du visible.
La ***figure 3*** montre une vue en plan schématique d'un intercalaire thermoplastique comprenant une zone opaque aux rayonnement des longueurs d'ondes du visible, ladite zone opaque encadrant une zone non opaque.

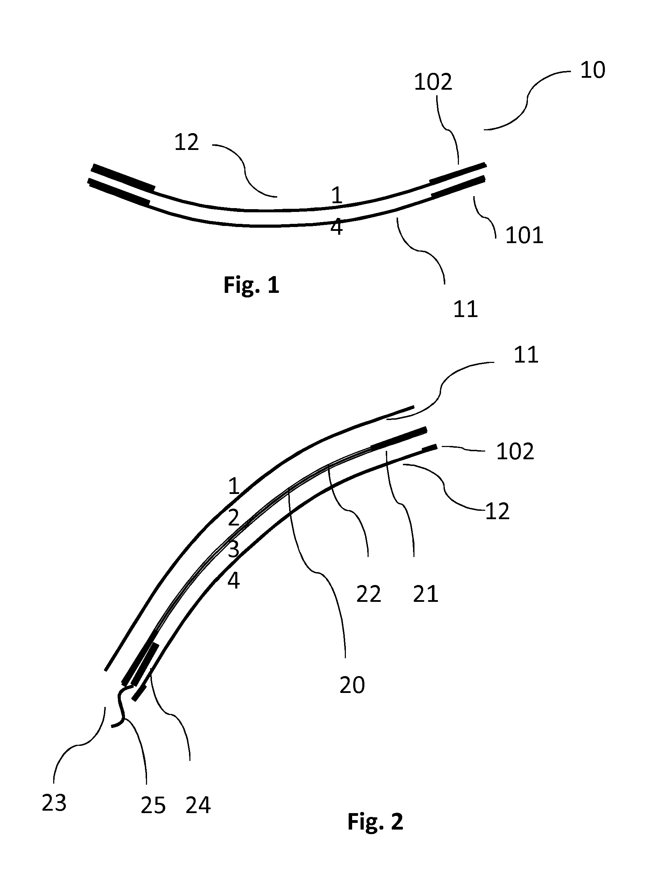

La ***figure 1*** montre un vitrage feuilleté connu de l'art antérieur, sous la forme d'un pare-brise pour automobile 10. Autour de la périphérie du pare-brise pour automobile 10, est disposée en faces 2 et 4 une bande d'occultation 101 et 102 plus précisément une couche d'émail qui a pour rôle d'une part de masquer et protéger le matériau d'étanchéité (non représenté) qui est utilisé pour fixer la vitre dans un véhicule (non représenté), et d'autre part de masquer les connexions électriques (busbars, etc) qui fournissent de l'énergie électrique au vitrage si besoin. La face du feuilleté qui est au contact avec l'environnement extérieur au véhicule est connue comme étant la face 1 et la surface en contact avec le milieu interne, c'est-à-dire l'habitacle du véhicule, est appelée face 4. Ainsi, les faces des feuilles de verre sont numérotées de 1 à 4 dans les figures. Dans la pratique les pare-brise, présentent des courbures lesquelles sont ordinairement plus accentuées sur les bords à l'endroit de la fixation à la carrosserie pour un accostage choisi pour son «design», l'aérodynamique correspondant à une bonne continuité de surface entre les éléments contigus.

La présence de bandes d'émail sur les faces 2 et 4 n'est pas sans effet sur le comportement du verre lors de son bombage, car celles-ci font absorber au verre, des rayonnements infrarouges (IR), et ce localement sur la périphérie du vitrage, alors que la surface interne du verre n'en n'absorbera que faiblement, c'est d'autant plus vrai pour les pare-brise pour lesquels les feuilles de verre sont généralement des verres clairs, cela l'est d'autant plus encore lorsque sont utilisées des couches réfléchissantes. Dans cette mise en oeuvre, des zones hautement absorbantes se côtoient avec des zones hautement réfléchissantes.

Il en résulte un défaut du verre appelé « burn line » qui est une déformation locale liée à ces deux phénomènes et parallèle aux bandes noires d'émail, elles sont d'autant plus fortes que les bandes noires sont larges. C'est la raison pour laquelle, ces « burn lines » sont essentiellement visibles en bande haute et basse des pare brises. Les bandes noires latérales sont toujours minces (Champ de vision à maximiser)

Les feuilles de verres 11 et 12 telles qu'illustrées dans les ***figures 1*** et ***2*** sont des verres de type silico sodocalcique. L'une ou les deux feuilles de verre peuvent être des feuilles de verre clair de type silico-sodo-calcique de composition suivante (en poids): SiO2 68-75%; Al2O3 à 0 - 5%; Na2O 10 - 18%; K2O à 0 - 5%; MgO 0 - 10%; CaO 5 à 15%; SO3 O - 2%. Le verre peut également contenir d'autres additifs, comme par exemple, des adjuvants d'affinage, en quantité allant jusqu'à 2%.

Selon un mode de réalisation particulier de l'invention, la feuille de verre interne du vitrage feuilleté peut être en verre teinté dans la masse, dont la composition peut comprendre un ou plusieurs des colorants suivants: oxyde de fer, l'oxyde de cobalt, le sélénium, l'oxyde de chrome, l'oxyde de titane, l'oxyde de manganèse, l'oxyde de cuivre, l'oxyde de vanadium, l'oxyde de nickel. Il est entendu que les deux feuilles de verre peuvent être en verre clair. Une ou les feuilles de verre peuvent être en verre trempé. Les feuilles de verre peuvent être plates ou incurvées. Chaque feuille de verre peut avoir une épaisseur comprise entre 0,5 et 25 mm d'épaisseur, de préférence entre 1 et 5 mm. L'épaisseur totale du vitrage automobile peut donc être comprise entre 1,5 et 100 mm, de préférence entre 2 et 50 mm, et de préférence encore entre 2,5 et 20 mm. De préférence, le vitrage a une transmission de la lumière visible (mesuré avec l'illuminant CIE A) supérieur à 70% et encore de préférence supérieur à 75% lorsque les deux feuilles de verre et les couches d'intercalaires thermoplastiques sont sensiblement clair. Si le vitrage présente globalement une teinte (parce que soit la feuille de verre interne du vitrage est corpsteinté ou un ou plusieurs plis de la matière de couche intermédiaire est teinté), il a de préférence une transmission de lumière visible (mesuré par la CIE Illuminant A) de moins de 40%, de préférence encore inférieure à 30% et de préférence inférieure à 25%, et une transmission énergétique totale (Parry Moon, Air Mass 1.5) de moins de 30%, de préférence encore inférieure à 25% et de préférence inférieure à 20%.

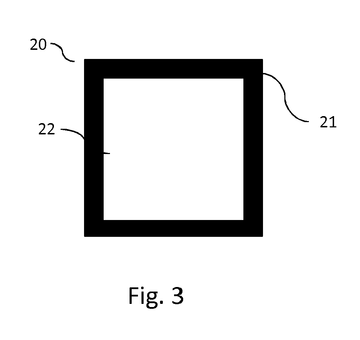

La ***figure* 2** montre un vitrage feuilleté, plus précisèment un pare-brise, selon l'invention dans lequel est prévu en face 2 de la feuille de verre 11 un intercalaire thermoplastique 20 comprenant une zone opaque aux rayonnements du visible 21, ladite zone opaque s'étendant sur toute la périphérie d'une zone non opaque 22 de l'intercalaire thermoplastique 20. Un tel intercalaire thermoplastique est représenté à la ***figure 3******.*** Contrairement à la ***figure 1******,*** la face 2 de la feuille de verre externe 11 est dépourvue d'une couche d'émail.

Selon ce mode de réalisation particulier, la zone opaque est formée d'un PVB noir teinté dans la masse présentant une transmission lumineuse de 0%. La zone non opaque 22 est ici représenté par un PVB clair et de manière préférentielle un PVB bloquant les UVs. Un tel PVB est aussi appelé « PVB UV-cut ». A la ***figure 2*** est également représentée un circuit conducteur de l'électricité 23 formé d'un busbar 24 et de connectiques 25, disposé à la périphérie du vitrage feuilleté en face 3 . Ce circuit conducteur est bien connu de l'homme du métier et son positionnement est classique dans ce type de vitrage. Il peut cependant être disposé sur une autre partie du vitrage feuilleté. La zone opaque 21 prévue sur les zones périphériques supérieure et inférieure du vitrage feuilleté (orientation selon la disposition haut/bas du vitrage sur l'automobile en tant que pare-brise) doit être de dimensions suffisantes pour masquer notamment le collage de la lèvre supérieure du joint d'étanchéité supérieur destiné à recevoir le vitrage feuilleté lorsqu'il est monté sur l'automobile, et également le collage du joint de gouttière disposé à la périphérie inférieure du vitrage.

Selon ce mode de réalisation particulier de l'invention, l'intercalaire thermoplastique 20 comprenant une zone opaque 21, s'étendant sur toute la surface du vitrage feuilleté, ladite zone opaque s'étendant quant à elle sur toute la périphériphérie de l'intercalaire thermoplastique 20. Ainsi, du fait de l'extension de l'intercalaire thermoplastique jusqu'aux bords du vitrage feuilleté, cela permet d'éviter un risque d'écaillement/d'enlèvement de la sérigraphie en face 2 lors de d'ébavurage de l'excès de PVB.

Egalement, grâce à l'invention, la « glitter line » est supprimée, puisque le même intercalaire thermoplastique est utilisé à la fois pour opacifier la zone à masquer (via la zone opaque aux rayonnements des longueurs d'ondes du visible) et permettre la lamination des 2 feuilles de verre, puisque l'intercalaire thermoplastique s'étend sur toute la surface du vitrage feuilleté.

Selon un mode de réalisation particulier de l'invention, seules les zones périphériques inférieure et supérieure du vitrage feuilleté sont pourvues de la zone opaque de l'intercalaire, les zones latérales sont pourvues de bandes d'émail sérigraphié de largeur faible afin de maximiser le champ de vision.

En outre, comme montré dans la ***figure 2******,*** une couche d'émail 102 peut être présente sur la face 4 du vitrage de manière à masquer les connectiques tels que les busbars et les connecteurs ou encore la colle permettant de coller ces éléments..., vus de l'intérieur du véhicule.

La ***figure* 3** montre le au moins premier intercalaire thermoplastique 20 selon un mode de réalisation particulier de l'invention.La zone opaque 21 se trouve à la périphérie de l'intercalaire thermoplastique 20. L'intercalaire thermoplastique 20 est de dimension légèrement plus élevée que celle des feuilles de verres 11 et 16 de manière à ce qu'il s'étende sur toute la surface des feuilles de verre. La zone opaque 21 selon ce mode de réalisation particulier prend la forme d'un cadre réalisé à partir d'un intercalaire thermoplastique coloré dont la transmission lumineuse est de 0%. En particulier, le cadre est réalisé à partir d'un PVB noir entourant la zone non opaque 22 qui elle est constituée d'un PVB transparent faisant écran aux UV ne laissant passer qu'une très faible proportion de ceux-ci. Pour les intercalaires de PVB de 0,38mm d'épaisseur plus de 95% des UV sont supprimés. Cette proportion peut dépasser 99%. Des polymères à base d'éthylène vinyl-acétate (EVA) sont aussi proposés qui renferment des composants leur conférant une très faible transmission des UV. Il est entendu que tout intercalaire thermoplastique présentant ces caractéristiques, à savoir une transmission inférieure à 5% et de préférence égale à 0% peut être utilisé pour former cette zone opaque. Les dimensions de la zone opaque sont de manière générale équivalentes à celles usuellement utilisées pour la bande d'occultation. Ces dimensions vont dépendre notamment de la zone à masquer. Ainsi, le au moins premier intercalaire thermoplastique tel que représenté par la ***figure 2*** est formé d'un cadre de PVB coloré dans la masse disposé sur le pourtour/périphérie d'un PVB transparent de manière à former l'intercalaire thermoplastique selon l'invention. Il est entendu que ce cadre peut être formé par différentes bandes disposées de manière à former ledit cadre, ces bandes fusionnant lors de l'étuvage de manière à former une pièce unique. Cependant, il peut être composé et appliqué à l'aide de tout autre moyen connu. L'intercalaire est ensuite prévu sur au moins la face 2 de la feuille de verre externe. Il peut bien entendu être aussi prévu sur la face 4. Un vitrage feuilleté selon l'invention peut être monté dans n'importe quelle vitre d'un véhicule.

Il peut être particulièrement et préférentiellement utilisé comme un pare-brise d'automobile.

De plus, un vitrage feuilleté selon l'invention peut être pourvu d'une fonctionnalité supplémentaire, par l'inclusion d'éléments appropriés, tel qu'un revêtement hydrophile ou hydrophobe sur les faces 1 ou 4. Par exemple, les vitrages feuilletés, tels qu'utilisés comme pare-brise ou lunette arrière de véhicule automobile comportent de nombreuses fonctionnalités telles que le support de rétroviseur intérieur, des bus-bars permettant d'amener un courant électrique, une bande supérieure filtrant le rayonnement solaire, à coloration éventuellement dégradée, un détecteur de pluie ...

L'application d'un intercalaire thermoplastique 20 comprenant une zone opaque 21 sur des vitrages de forme complexe tels que les pare-brise ne se limite pas nécessairement aux bandes opaques dissimulant l'emplacement du collage ou tout autre élément inesthétique. La même technique peut être utilisée pour la mise en place de tout élément décoratif ou d'identification que celui-ci soit ou non opaque.

L'intercalaire thermoplastique comprenant une zone opaque est en particulier incorporer dans des assemblages qui les mettent à l'abri des risques d'abrasion ou d'attaque chimique. C'est le cas en particulier des vitrages feuilletés. Pour ces derniers, l'intercalaire thermoplastique comprenant une zone opaque est avantageusement disposé entre les feuilles constituant le vitrage, que celui-ci comporte deux feuilles de verre assemblées au moyen d'un intercalaire du type PVB, ou encore que le vitrage soit du type dit « bi-layer », composé d'une feuille de verre associée à une feuille organique de type polyuréthane. L'intercalaire thermoplastique comprenant une zone opaque peut encore être appliqué sur une face « interne » de vitrages multiples. Enfin lorsqu'une seule feuille de verre est utilisée, la zone opaque de l'intercalaire thermoplastique, qui serait exposée à des risques de dégradation mécanique ou chimique, peut être protégée par un revêtement protecteur appliqué soit uniformément sur tout le vitrage soit localement sur la zone opaque.

## Revendications

1. Vitrage feuilleté comprenant une première (11) et une seconde (12) feuilles de verre laminées au moyen d'au moins un intercalaire thermoplastique (20), **caractérisé en ce que** le au moins un intercalaire thermoplastique (20) comprend une zone opaque aux longueurs d'ondes du visible (21).

2. Vitrage feuilleté (10) selon la revendication 1, **caractérisé en ce que** la zone opaque 21 s'étend sur la périphérie d'au moins une des première (11) et seconde (12) feuilles de verre.

3. Vitrage feuilleté (10) selon l'une quelconque des revendications 1 et 2, **caractérisé en ce que** la zone opaque 21 s'étend sur la périphérie de la face interne 2 de la première feuille de verre (11).

4. Vitrage feuilleté (10) selon l'une quelconque des revendications précédentes, **caractérisé en ce que** le au moins un premier intercalaire (20) est formé par une zone opaque (21) dont la transmission lumineuse est inférieure à 5% et de préférence de 0% de la lumière incidente.

5. Vitrage feuilleté (10) selon l'une quelconque des revendications précédentes, **caractérisé en ce que** le au moins un premier intercalaire thermoplastique (20) est disposé substantiellement sur la surface du vitrage.

6. Vitrage feuilleté (10) selon l'une quelconque des revendications précédentes, **caractérisé en ce que** le au moins un premier intercalaire (20) est formé à partir d'un cadre opaque (21) disposé autour d'une zone non opaque (22).

7. Vitrage feuilleté (10) selon l'une quelconque des revendications précédentes, **caractérisé en ce que** la zone opaque (21) s'étend sur les bords inférieur et supérieur du vitrage feuilleté (10).

8. Vitrage feuilleté (10) selon l'une quelconque des revendications précédentes, **caractérisé en ce que** le au moins un premier intercalaire thermoplastique (20) est une feuille de poly vinyl butyral ou d'éthylène-acétate de vinyl.

9. Vitrage feuilleté (10) selon l'une quelconque des revendications précédentes, **caractérisé en ce que** la zone opaque (21) est obtenue par une coloration en masse de la périphérie de l'intercalaire.

10. Vitrage feuilleté (10) selon l'une quelconque des revendications précédentes, **caractérisé en ce que** le vitrage est un pare-brise pour automobile.

11. Utilisation d'un vitrage (10) selon l'une quelconque des revendications précédentes en tant que vitrage pour automobile.
